# EUROPEAN PATENT SPECIFICATION

(11) **EP 2 904 820 B1**
(45) Date of publication and mention of the grant of the patent: **15.07.2020**
(21) Application number: 12773228.7
(22) Date of filing: 08.10.2012
(51) Int. Cl.: H04W 4/70, H04L 29/06, H04W 12/02, H04W 12/00

(54) **COMMUNICATION SYSTEM AND A METHOD FOR OPERATING THE SAME**
KOMMUNIKATIONSSYSTEM UND VERFAHREN ZU SEINEM BETRIEB
SYSTÈME DE COMMUNICATION ET PROCÉDÉ D'UTILISATION DUDIT SYSTÈME

(43) Date of publication of application: 12.08.2015
(73) Proprietor: Telefónica Germany GmbH & Co. OHG, 80992 München (DE)
(72) Inventor: HENRICI, Dirk, 80797 München (DE)
(74) Representative: Herrmann, Uwe
(86) International application number: PCT/EP2012/004208
(87) International publication number: WO 2014/056511

(56) References cited:
- US-A1- 2010 095 361
- US-A1- 2012 180 119
- "3rd Generation Partnership Project; Technical Specification Group Services and System Aspects; System improvements for Machine-Type Communications (MTC) (Release 11)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.0.0, 18 September 2012 (2012-09-18), pages 1-165, XP050649142, [retrieved on 2012-09-18]
- "3rd Generation Partnership Project; Technical Specification Group Services and System Aspects; Security aspects of Machine-Type and other Mobile Data Applications Communications Enhancements; (Release 12)", 3GPP STANDARD; 3GPP TR 33.868, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.10.0, 19 September 2012 (2012-09-19), pages 1-55, XP050649233, [retrieved on 2012-09-19]
- "3rd Generation Partnership Project; Technical Specification Group Services and System Aspects; Service requirements for Machine-Type Communications (MTC); Stage 1 (Release 12)", 3GPP STANDARD; 3GPP TS 22.368, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V12.0.0, 18 September 2012 (2012-09-18), pages 1-25, XP050649170, [retrieved on 2012-09-18]

## Description

The present invention is related to a method for operating a communication system, in particular a mobile communication network, including an IP Multimedia Subsystem (IMS) core network running on the system architecture, wherein one or more IMS clients can establish a communication session with other IMS clients over the IMS core network.

The Internet Multimedia [Sub-] system (IMS) is a standardized session control layer on top of IP networks that uses the Session Initiation Protocol (SIP) for the signaling process. Today, IMS is often used for fixed net voice platforms, like VoIP service over DSL, and also for the 3GPP (3rd Generation Partnership Project) standard for native Long-Term Evolution (LTE) voice services within mobile networks. Rich Communication Suite enhanced (RCSe), alias "Joyn" services employ the IMS as well.

The IMS can be interpreted as a technical enabler providing reuse functionality of specified IMS features. Arbitrary services can be implemented on top of the IMS and use the available IMS services. The IMS provides higher-level services to applications, e.g. handling of multimedia streams, mobility handling, QoS management. From a developer perspective, the use of an IMS network avoids the need for re-implementing basic communication services on top of IP for each application. Different communication streams can be treated in a different manner by the network (e.g. regarding required QoS).

In practice, the IMS is mostly used for implementing voice communication services plus interoperable add-on services like RCSe. However, further applications exist which might benefit from the IMS structure.

An example are M2M applications which use one or more devices (such as sensors or meters or cameras) to capture an event, which is relayed through a network (wireless, wired or hybrid) to an application running on a backend server. In the future, mobile networks are increasingly used for establishing a communication between the devices and the backend servers.

As M2M devices usually are resource scarce embedded systems, they are very vulnerable to attacks like denial-of-service. Due to their decentral mode of operation and possible mobile nature, they are difficult to manage, e.g. for applying security patches to them. Therefore, M2M devices should not be reachable from the public Internet.

Document 3GPPTR23.888V11.0.0 discloses system improvements for machine-type communications. Therein, it is suggested using a VPN-connection for communications between an MTC server and an user equipment. Document 3GPPTR33.868 discuses a service requirement for machine-type communications.

The documents 3GPPTR33.868 V0.10.0, XP050649233; US 2010/095361 A1; and US 2012/180119 A1 represent further relevant prior art.

The aforementioned system should be built up with respect to its implementation and operating costs. The more attractive the pricing for the service, the more interesting the product is to the customer. The internal costs for the operator/carrier should be kept low.

It is the object of the present invention to provide an improved communication system and a method for operating the same which offers improved functionality for an application, in particular a M2M application, a secure communication between at least two peers and keeping the implementation and operating costs as low as possible.

In accordance with the present invention, this object is initially solved by a method with the features of claim 1 or a thereto corresponding system with the features of claim 11. Advantageous aspects of the method in accordance with the present invention are provided in the dependent claims.

The basis for performing the method is an IMS core network which runs on the system infrastructure of the operated communication system. For example, the communication system corresponds to the system infrastructure of a mobile or fixed network provider.

In a preferable aspect of the invention a Home Subscriber Server (HSS) can act as a subscriber database for authenticating the clients of the communication network as IMS clients. In addition, there can be one or more application servers (AS) that implement additional services. Usually, there is at least one Telephony-AS that implements supplementary services. Further ASs may exist which provide optional off-the-shelf services and/or implement customized services.

IMS clients can establish a communication session with at least one other IMS client over the IMS core network. The basic flow for establishing a connection is as follows: At first, a communication has to be negotiated by a signaling process which takes place via the IMS core network. The HSS is involved for subscriber authentication to assure that only known and/or valid and/or allowed IMS clients can connect to the IMS core network. The signaling path can also be directed via one or more AS (e.g. call-forwarding can be implemented there). The signaling path is directed to the communication peer who has to acknowledge the incoming request for completing the signaling process. After a successful signaling process a media connection is established between the peers.

Due to security reasons the IMS core network should be operated separated from other networks, e.g. the public Internet or any customer networks. According to the invention the IMS core network runs in logical separation from other networks. The system architecture comprises means which provide at least on Virtual Private Network (VPN) for a specific number of IMS clients.

One advantage of the invention is that the inventive solution provides a logical separation of the established connections between specified IMS-client and the remaining network subscribers. Therewith, a good and efficient protection against various attacks is achieved. A further important characteristic of the solution is that all IMS clients have to be authenticated. No anonymous users exist within the VPN. Any malicious usage can thus be mitigated.

As the inventive method is IMS based, it can be used for transporting arbitrary data streams between the IMS clients. Thus, the flexibility of the system can be increased. Further, the invention can be implemented at low cost so that attractive margins for the system operator are possible. The implementation makes use of existing assets (IMS core) that are already present in many carrier networks.

In a preferred aspect of the invention, at least one VPN is implemented using a Multiprotocol Label Switching VPN (MPLS-VPN). By using MPLS on top of a single physical infrastructure several logically independent infrastructures can be set up.
In a two party scenario, the customer (as the first party) has a network on its own that may span the complete carrier infrastructure (as the second party) that is MPLS enabled. The customer gets an "MPLS-VPN". From a carrier perspective, the customer traffic is tagged and transported logically separated over the carrier's infrastructure next to traffic of other customers, the carrier's management traffic, or even Internet traffic.
According to another aspect of the invention, in a three party scenario, the networks of two customers get an MPLS VPN that logically separates the traffic over the carrier's infrastructure. In yet another aspect of the invention, in a four or more party scenario, the netoworks of two or more customers get an MPLS VPN that logically separated the traffic over the infracture of two or more carriers.

In accordance with an advantageous aspect of the invention at least one MPLS-VPN may be defined for the signaling traffic and another MPLS-VPN may be defined for the media traffic.

IMS clients do not reside directly in the described IMS core network, in particular the used MPLS-VPNs. One or more IMS clients are preferably located in various networks which have to be interconnected to the IMS core network to establish an IMS based communication. Therefore, one or more gateways are integrated acting as an entrance to the IMS core network.

It is preferable to provide a controlled interconnection between the separated networks and the IMS core network. In a particular aspect of the invention one or more so-called Session Border Controllers (SBC) act as a gateway to one or more other separated networks. A SBC can be regarded as a kind of "IMS firewall".

According to a further aspect of the invention at least one separated network is an access network, in particular a mobile access network based on at least one of the following standards GSM, GPRS, UMTS or LTE. The access network might also be based on a WLAN access network or a wireline access network such as DSL, ISDN or POTS.

In particular, a mobile network can be set up in such a manner that traffic for a specific Access Point Name (APN) exclusively reaches the aforementioned SBC. A mobile IMS client located in the mobile network uses said APN to virtually connect via the SBC directly with the IMS core. Consequently, data traffic of said mobile IMS client is completely separated from any other network like the Internet.

Preferable, at least one IMS client can be a mobile device comprising a GSM and/or UMTS and/or LTE radio transceiver.

Additionally or alternatively, at least one separated network is an arbitrary customer VPN, such as a company intranet. The customer VPN may also be based on a MPLS-VPN. For example, a MPLS-VPNs can be set-up in such a way that the SBC can be reached within the customer's VPN. This way, an IMS client located within the customer VPN can communicate with the IMS core in a controlled manner. As an additional option, a customer firewall can be placed in the traffic path between the SBC and the access node of the customer VPN for securing the administrative border of the customer.

It is also possible to interconnect the IMS core network by an SBC to the public network (Internet) as a separated network. This means that an IMS client in the Internet can use IMS services by accessing the IMS network while using the SBC as a gateway. It may be useful to take special care on securing the IMS network against attacks from the Internet, e.g. against denial-of-service attacks.

At least one IMS client can be a backend server which is located within a separated network, in particular within an arbitrary customer VPN, such as a company intranet. The at least one backend server may also be located within the public internet. The at least one backend server could be connected using an MPLS-VPN or - at a lower cost but less security - via the Internet. In the latter case, a customer firewall should restrict IMS communication at the IP layer to be allowed only between the respective SBC of the IMS core network and the backend server.

Due to the logical separation of traffic any uncontrolled communication between at least two IMS clients should be prohibited, even when the uncontrolled communications is directed via at least one SBC. It is useful to allow only expected communication sessions between at least two IMS client. In accordance with another advantageous aspect of the invention data traffic between at least two IMS clients is only allowed if the connection has been negotiated before by a signaling process. For instance, the connection is negotiated via the Session Initiation Protocol (SIP) beforehand. The SBC can listen to the signaling processes and gain knowledge about subsequent data connections. Only these connections must be allowed.

Therefore, according to another preferred aspect of the invention media streams that were negotiated via SIP can be established directly between the communicating IMS clients when they are able to reach each other. If all data related to IMS communications, i.e. signalling and media traffic, is directed via SBC, it is ensured that the passing traffic streams are under control of at least one SBC, thereby preventing direct reachabilty on the IP layer between IMS clients

In an advantageous aspect of the present invention at least one VPN is provided by restricting communication sessions between specific IMS clients based on a blacklist and/or whitelist functionality. A whitelist may contain information about destination or originating IMS clients which are explicitly approved to connect to a respective IMS client. The list can have any granularity as needed. Additionally or alternatively, blacklist can be used which approve all IMS clients except the listed ones.

At least one black- and/or whitelist are dedicated to each IMS client. Each list defines a number of destination IMS clients which can be reached by the respective client and/or a number of originating clients which can reach the respective client. Preferably, the lists are separated into at least one originating list per IMS client and at least one destination list per IMS client.

When an IMS client tries to establish a session with another IMS client, the respective lists of both clients are checked whether the requested connection attempt is allowable or should be rejected.

Device/subscriber groupings like in MPLS-VPNs can be realized by the described white- and/or blacklists. For instance, in a known full-meshed MPLS-VPN, all clients in that VPN can communicate with all other clients in that VPN. According to the invention the same is realized in the IMS core network using the described whitelisting functionality. Preferably, a whitelist is provided that whitelists all IMS clients in a desired "IMS-VPN" in the destination whitelist and in the originating whitelist. This way, no session establishment to or from IMS clients outside the "IMS-VPN" is possible.

Any other VPN topologies like hub-and-spoke can be realized with the described whitelist concept as well. As a subscriber level definition is possible, different "IMS-VPNs" may overlap each other.

Each IMS client may have four white- and/or blacklists. Two of them (originating whitelist) control which other clients can reach the respective IMS client, the two others (destination whitelist) control which other clients can be reached by the IMS client. It might be useful to have an operator-determined whitelist that cannot be changed by the client itself and a user-determined whitelist that the client can modify. Various ways are conceivable for performing that modification.

The operator-determined whitelists can be used for the IMS network operator to impose restrictions depending on the tariff that the customer has chosen for a subscription. For instance, there could be a whitelist that is only permitting that a certain client can be reached or one permitting that only a certain group of client can be reached (e.g. clients that belong to the same customer account). Similarly in the other direction, there could be a whitelist in which the operator defines that the respective client can only be reached by a certain other client or a certain group of other clients (e.g. clients that belong to the same customer account).

In addition, the customer can have similar user-defined whitelists for the respective IMS subscription. These can be adapted by the customer. Whitelisting of a client has to be done in both, operator-determined and user-determined, whitelists for checking communication attempts with respect to their admission. If a subscriber is only whitelisted in one of the two whitelists, communication attempts are rejected.

At least one user-determined white- and/or blacklist can be modified by the operator of the communication system, probably on customer demand.

According to an advantageous aspect of the invention the user-determined list is configurable by a customer self-service. The user might be able to control the user-determined whitelists and also to include a specified user-determined client list into the user-determined whitelists. A customer self-service can be preferably provided via an API, such as the SOAP and RESTful environment, and/or via a web frontend and/or via specially formatted emails.

Modification of the whitelists can either be free of charge or billed by the operator.

The management of the communication system and/or the administration of the at least one white- and/or blacklist can be simplified by using references within at least one whitelist. It can be helpful to administrate a central white- and/or blacklist which is referenced by at least one white- and/or blacklist dedicated to an IMS client. Single or multi references are conceivable.

As in the example scenario of a full-meshed VPN all IMS clients have the same whitelist, it makes sense to have client lists that can be included in other whitelists. Each client comprises a whitelist that references/includes to a common client list. When the common client list is modified, this would affect the whole VPN so that the possibility of a central management is provided. The operator of the IMS network may also provide operator-determined client lists (e.g. with all clients of a customer account) that can be included into user-determined whitelists by the customer.

In accordance with the invention, the above-mentioned object is also solved by a communication system comprising means for performing the inventive method as specified above. Obviously, the system offers the same characteristics and benefits as the above mentioned method.

The invention is also directed to an inventive application of the above-mentioned inventive system. According to the invention the inventive communication system serves for a Machine to Machine (M2M) application. At least two customer devices may communicate over the communication system for implementing a M2M application.

Further details and advantages of the invention will be explained in detail with reference to an embodiment illustrated in a drawing. The very figure shows an overview of the system architecture according to the invention.

The shown communication system is subdivided into the IMS core network 10, the mobile network 20 and the public internet 30. It should be noted that the present invention mainly refers to the IMS core network which is running on the system architecture of a network providers. The IMS core network provides means to securely connect M2M devices 60 located in the mobile network 20 to a backend server 700 located at the public internet.

The customer's mobile devices 60 are of an embedded system design including a GSM/UMTS/LTE radio transceiver and a SIM card. An additional software library is used to provide IMS client functionality within the operating software of the devices 60. Higher-level functionality (e.g. media streaming for webcams) etc. can also be provided if needed, thus enabling rapid development of complex applications. Devices 60 can communicate with other devices 60 as well as the backend servers 700 by using the IMS core network.

Inside mobile network 20 data traffic can be separated by using separate Access Point Names (APNs) 100 defined as logical endpoints on the Gateway GPRS Support Node (GGSN) or PDN Gatway (P-GW). Each APN 100 can be treated differently, e.g. with respect to QoS (quality of service) or the associated endpoint for delivering data. For instance, a first APN can be configured for usual Internet traffic wherein a second specific APN serves for other specified purposes.

Mobile devices 60 connect to the specified APN 101 which routes the traffic of mobile devices 60 to the SBC 40. This way, the mobile devices using this APN 101 virtually connect via the SBC 40 directly with the IMS core 10. Traffic is completely separated from other networks like the Internet 30.

Another IMS client is shown by the backend server 700 which is interconnected through the public internet 30 to the IMS core network 10. A controlled interconnection between the IMS 10 and the public internet is achieved by a second SBC 500 which acts as a gateway. A customer firewall 80 and/or access list is arranged between SBC 500 and backend server 700. The firewall 80 is configured to limit communications to server 700 to IMS data connections which are established between server 700 and the carrier's SBC 500.

Clients 60, 700 can only connect to IMS core network 10 if they authenticate themselves as IMS clients. Therefore, a HSS 90 (home subscriber server) is included in the IMS core network 10 which acts as an authentication entity. In addition, there can be application servers (AS) that implement additional services.

For establishing a connection between at least one of the devices 60 and the backend server 700 a signaling process has to be initiated. The signaling path 300 takes place via the IMS core which involves the HSS for authentication of the IMS clients 60, 700. The signaling can be directed via one or more AS 90 (e.g. call-forwarding can be implemented there). At the end, the signaling reaches the destination communication client 700 that acknowledges the incoming request. Then the media connection 200 that was negotiated using the signaling path 300 is established between the peers 60, 700.

In the described one-operator setup it is required that both IMS clients belong to the same defined VPN within the IMS core network 20. Therefore, HSS or AS 90 stores and administrates a total of four whitelists for each IMS client 60, 700. Two whitelists per IMS client 60, 700, a user-determined and an operator-determined originating list, control which other IMS clients 60, 700 can reach the specified IMS client. For example, it can be defined that device 60 can exclusively be reached by backend server 700. The other two lists, also a user-determined and an operator-determined destination list, control which other clients the respective client can reach. For example, it can be defined that device 60 can exclusively reach backend server 700.

When IMS client 60 tries to establish a session with client 700 the two originating whitelists of the client 60 that initiated the session and the two termination whitelists of the destination client 700 have to be compared. In detail, all lists have to be checked whether the planned connection is admissible. The comparison is also initiated during the signaling process.

The operator-determined whitelists can be used for the IMS network operator to impose restrictions depending on the tariff that the customer has chosen for a subscription. For instance, there could be a whitelist that is only permitting that a certain client can be reached or one permitting that only a certain group of client can be reached (e.g. clients that belong to the same customer account). Similarly in the other direction, there could be a whitelist in which the operator defines that the respective client can only be reached by a certain other client or a certain group of other clients (e.g. clients that belong to the same customer account).

A typical example communication that also makes use of the IMS shown communication system could be a surveillance camera application as a mobile device 60. The surveillance cameras shall communicate with a backend server 700 as a central analysis service for the images. Embedded devices 60 with the cameras can then be connected securely to the backend servers 700 using the proposed approach. Communication is limited to paths between the camera devices 60 and the backend servers 700 by restricting IP communications to only allow connections to the SBCs 40, 500 and by providing appropriate whitelists on the IMS layer. The embedded devices 60 cannot be reached by unauthorized peers, neither on the IMS layer nor on the IP layer. The device is thus secured against attacks from outside.

The communication system may also serve to establish secure communication channels for respective applications. There are lots of applications that need secure communication channels, for instance online banking, communication with the secure element in NFC, and many more applications. In that case, IMS sessions could be used for data transfer. This provides a logical separation from other networks, especially the open Internet 30. The proposed whitelist approach limits communication to whitelisted clients. In this scenario, the communication devices 60 belong into several administrative domains, for example user's mobile devices 60 (notebook, tablet, smartphone) and on the other hand a backend server 700, e.g. one for online banking. For the IMS account of the backend server 700, the bank would limit IMS communication to be allowed by registered user devices 60 only (i.e. the IMS subscription of backend server would have a "user-determined destination" whitelist containing all registered customer devices only).

The communication system is also enabled to provide a data tunnel into a customer network (e.g. mobile device like notebook or tablet PC to customer intranet). In this scenario, whitelisting would restrict communication to be allowed between the user's registered devices 60 and the tunnel endpoint 700 in the company network. An IMS session would be used to establish a secure tunnel between the user's device 60 and the company's tunnel endpoint 700 over which arbitrary data can be exchanged. On the endpoints, virtual network devices (e.g. tun/tap interfaces within Linux) can be created. This way, the solution acts as a VPN (layer 2 or layer 3) like created by other VPN solutions. The tunnel can be encrypted optionally, e.g. by using SSL/TLS (e.g. using stunnel).

A major advantage of such an IMS-based solution for the creation of a VPN that can transport arbitrary IP traffic is that mobility features of the IMS can be made use of. There are many solutions that provide the possibility for a seamless handover if the access network changes. This way, IMS sessions (and in this case the VPN connection) can persist while the user is mobile and/or connected via different networks (fixed, cable, WiFi, GSM/UMTS/LTE).

Similar to the creation of a tunnel for VPN purposes like stated before, a tunnel can be used to help in IPv6 introduction projects. Via a tunnel that is realized over an IMS session, a device 60 that only has IPv4 connectivity by itself can be connected to an IPv6 network.

The invention can also be used to provide the capability for P2P communications that is restricted to a particular user group by the whitelists. The IMS provides a layer of indirection, so that the communication becomes independent of the underlying access networks (IP address, no limitations by restricted end-to-end connectivity).

The inventive communication system can be implemented at low cost so that attractive margins are possible. The reason is that it makes use of existing assets (IMS core) that are already present in many carrier networks. Provisioning is much simpler than for other solutions like MPLS-Link because all provisioning can be done on IMS subscriber level and does not require per-subscriber configuration on IP level.

Devices do not need to make heavy use of resource-intensive cryptographic protocols. Only whitelisted IMS subscribers can reach them on IP level via the SBCs so that the devices do not need to cope with unwanted requests.

The invention provides logical network separation and therewith good protection against various attacks. For providing confidentiality, an additional layer of encryption can be implemented on top if needed, e.g. using SSL/TLS. An important characteristic of the solution is that all clients are authenticated. There are no anonymous users; any malicious usage can thus be mitigated easily.

As the solution is IMS based, it can be used for transporting arbitrary data streams between the clients. Thus, it is very flexible. If the IMS implementation provides seamless handover, the streams can even survive changes in access networks, e.g. due to user's mobility. There are no network layer restrictions on end-to-end reachability, e.g. like introduced by NAT. Thus there is no unwanted restriction which peer establishes a session.

IMS services are not limited to a single carrier. IMS-based interconnections are planned, e.g. for realizing RCSs. This allows the concept to be used via multiple carriers / IMS network operators. This provides more possibilities than MPLS-VPNs as these are usually limited to a single carrier.

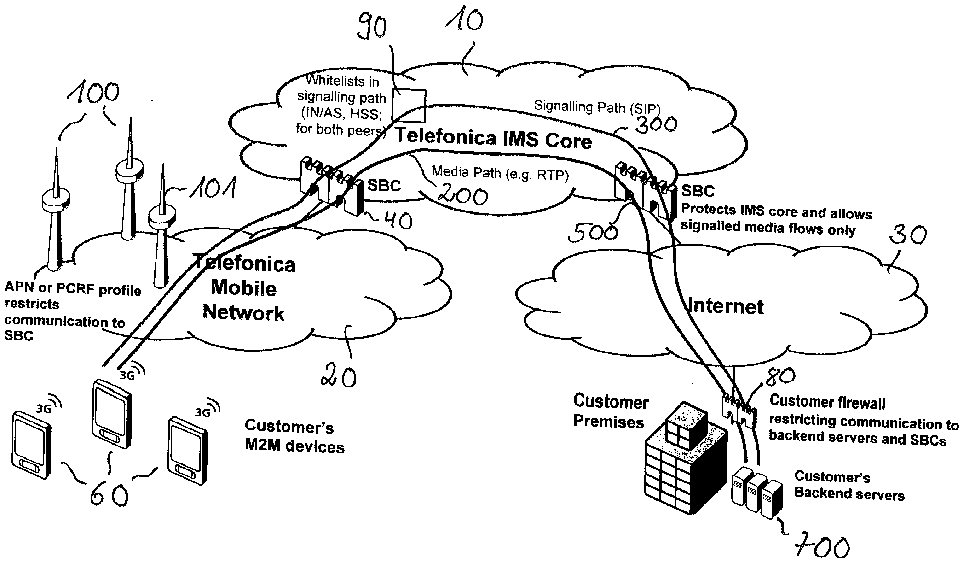

## Claims

1. A method for operating a communication system comprising a mobile communication network, including an IP Multimedia Subsystem IMS core network (10) running on the system architecture, wherein one or more IMS clients (60, 700) can establish a communication session with other IMS clients (60, 700) over the IMS core network (10), wherein at least one IMS client (60) is a M2M device and resides in a mobile acces network (10, 30) which is interconnected with the IMS network (10) via at least one Session Border Controller (SBC) (40, 500), wherein at least one Virtual Private Network VPN is provided for a specific number of IMS clients (60, 700) communicating over the IMS core network (10) for ensuring a logical network separation of the IMS core network (10), wherein the mobile access network is configured such that traffic for a specific Access Point Name APN exclusively reaches said Session Border Controller SBC and said at least one IMS M2M device (60) located in the mobile access network is configured to use said specific Access Point Name to directly connect via said Session Border Controller to the IMS core network, and wherein the at least one VPN within the IMS (10) restricting at least one communication session between specific IMS clients (60, 700) is provided by a blacklist and/or a whitelist dedicated to each IMS client and defining destination IMS clients (60, 700) approved to be reached by the dedicated IMS client (60, 700) and/or defining originating IMS clients (60, 700) approved to reach the dedicated IMS client (60, 700).

2. The method according to claim 1, **characterised in that** at least one VPN is implemented by a MPLS-VPN.

3. The method according to any of the preceding claims **characterised in that** at least one VPN, in particular MPLS-VPN, is provided for signaling traffic and/or media traffic within the IMS core network (10).

4. The method according to any of the preceding claims **characterised in that** media traffic of a connection between at least two IMS clients (60, 700) can be restricted or prohibited if said connection has not been signaled beforehand, for instance negotiated via SIP.

5. The method according to any of claims 1 to 4 **characterised in that** the IMS core network (10) is configured such that all IMS data traffic, i.e. signaling and media traffic, passes at least one SBC (40, 500).

6. The method according to any of the preceding claims **characterised in that** at least one IMS client (700) resides in a separated network which is a customer VPN, in particular a customer MPLS-VPN network, and/or a public network Internet (30).

7. The method according to any of the preceding claims **characterised in that** at least one IMS client (60, 700) is a mobile device and/or a backend server wherein the at least one mobile device (60) comprises a GSM and/or UMTS and/or LTE radio transceiver.

8. The method according to any of the preceding claims **characterised in that** the system provides at least one operator-determined white- and/or blacklist configurable by the network operator and/or at least one user-determined white- and/or blacklist configurable by the dedicated IMS client (60, 700).

9. The method according to claim 8 **characterised in that** the user-determined white- and/or blacklist is configurable by a customer self-service, for instance via API, in particular SOAP and/or RESTful, and/or via web frontend and/or via specially formatted emails.

10. The method according to any of the preceding claims **characterised in that** at least one white- and/or blacklist contains a reference to at least another list, in particular a central managed white- and/or blacklist.

11. A communication system comprising means for performing the method according to any of the preceding claims.

12. The communication system according to claim 11 used for a Machine to Machine M2M application.

## Patentansprüche

1. Verfahren zum Betreiben eines Kommunikationssystems, welches ein Mobilkommunikationsnetz aufweist, das ein Kernnetz (10) eines IP Multimedia Subsystems, IMS, beinhaltet, das auf der Systemarchitektur läuft, wobei einer oder mehr IMS-Clients (60, 700) eine Kommunikationssitzung mit anderen IMS-Clients (60, 700) über das IMS Kernnetz (10) aufbauen kann, wobei zumindest ein IMS-Client (60) eine M2M-Vorrichtung ist und sich in einem Mobilzugangsnetz (10, 30) befindet, das mit dem IMS Netz (10) über zumindest einen Session Border Controller (SBC) (40, 500) verbunden ist, wobei zumindest ein Virtual Private Network (VPN) für eine bestimmte Anzahl von IMS-Clients (60, 700), die über das IMS Kernnetz (10) kommunizieren, zur Sicherstellung einer logischen Netztrennung des IMS Kernnetzes (10) vorgesehen ist, wobei das Mobilzugangsnetz derart eingerichtet ist, dass Verkehr für einen bestimmten Access Point Name, APN, ausschließlich den besagten Session Border Controller, SBC, erreicht, und die besagte zumindest eine IMS M2M-Vorrichtung (60), die sich in dem Mobilzugangsnetz befindet, eingerichtet ist, diesen bestimmten Access Point Name zu verwenden, um sich direkt über den besagten Session Border Controller mit dem IMS Kernnetz zu verbinden, und wobei das zumindest eine VPN innerhalb des IMS (10), das zumindest eine Kommunikationssitzung zwischen bestimmten IMS-Clients (60, 700) einschränkt, durch eine Blacklist und/oder eine Whitelist dediziert für jeden IMS-Client bereitgestellt ist, welche Ziel-IMS-Clients (60, 700) definiert, die als von dem dedizierten IMS-Client (60, 700) zu erreichen genehmigt sind, und/oder Ausgangs-IMS-Clients (60, 700) definiert, die den dedizierten IMS-Client (60, 700) erreichen dürfen.

2. Verfahren nach Anspruch 1, **dadurch gekennzeichnet, dass** zumindest ein VPN durch ein MPLS-VPN implementiert ist.

3. Verfahren nach einem der vorstehenden Ansprüche, **dadurch gekennzeichnet, dass** zumindest ein VPN, insbesondere MPLS-VPN, zur Signalisierung von Verkehr und/oder Medienverkehr innerhalb des IMS Kernnetzes (10) bereitgestellt ist.

4. Verfahren nach einem der vorstehenden Ansprüche, **dadurch gekennzeichnet, dass** Medienverkehr einer Verbindung zwischen zumindest zwei IMS-Clients (60, 700) eingeschränkt oder verboten werden kann, falls die Verbindung nicht vorab signalisiert wurde, beispielsweise vermittelt über SIP.

5. Verfahren nach einem der Ansprüche 1 bis 4, **dadurch gekennzeichnet, dass** das IMS Kernnetz (10) derart eingerichtet ist, dass der gesamte IMS Datenverkehr, also der Signalisierungs- und Medienverkehr, zumindest einen SBC (40, 500) passiert.

6. Verfahren nach einem der vorstehenden Ansprüche, **dadurch gekennzeichnet, dass** sich zumindest ein IMS-Client (700) in einem getrennten Netz befindet, bei dem es sich um ein Kunden-VPN, insbesondere ein Kunden MPLS-VPN-Netzwerk, und/oder ein öffentliches Internetnetzwerk (30) handelt.

7. Verfahren nach einem der vorstehenden Ansprüche, **dadurch gekennzeichnet, dass** zumindest ein IMS-Client (60, 700) ein Mobilgerät und/oder ein Backend-Server ist, wobei das zumindest eine Mobilgerät (60) einen GSM- und/oder UMTS- und/oder LTE-Sendeempfänger aufweist.

8. Verfahren nach einem der vorstehenden Ansprüche, **dadurch gekennzeichnet, dass** das System zumindest eine Betreiber-bestimmte Whitelist und/oder Blacklist, die von dem Netzbetreiber konfigurierbar ist, und/oder zumindest eine Nutzer-bestimmte Whitelist und/oder Blacklist bereitstellt, die von dem dedizierten IMS-Client (60, 700) konfigurierbar ist.

9. Verfahren nach Anspruch 8, **dadurch gekennzeichnet, dass** die Nutzer-bestimmte Whitelist und/oder Blacklist durch eine Kundenselbstbedienung konfigurierbar ist, beispielsweise über eine API, insbesondere SOAP und/oder RESTful, und/oder über ein Web-Frontend und/oder über speziell formatierte E-Mails.

10. Verfahren nach einem der vorstehenden Ansprüche, **dadurch gekennzeichnet, dass** zumindest eine Whitelist und/oder Blacklist eine Referenz auf zumindest eine andere Liste enthält, insbesondere eine zentral-verwaltete Whitelist und/oder Blacklist.

11. Kommunikationssystem, aufweisend Mittel zur Durchführung des Verfahrens gemäß einem der vorstehenden Ansprüche.

12. Kommunikationssystem nach Anspruch 11, das für eine M2M-, Machine to Machine, Anwendung verwendet wird.

## Revendications

1. Procédé de fonctionnement d'un système de communication comprenant un réseau de communication mobile, incluant un réseau central de sous-système multimédia IP (IMS) (10) fonctionnant sur l'architecture du système, dans lequel un ou plusieurs clients IMS (60, 700) peut/peuvent établir une session de communication avec d'autres clients IMS (60, 700) sur le réseau central IMS (10), dans lequel au moins un client IMS (60) est un dispositif M2M et réside dans un réseau d'accès mobile (10, 30) qui est interconnecté avec le réseau IMS (10) via au moins un contrôleur de session en périphérie (SBC) (40, 500), dans lequel au moins un réseau privé virtuel (VPN) est fourni pour un nombre spécifique de clients IMS (60, 700) communiquant sur le réseau central IMS (10) pour garantir une séparation réseau logique du réseau central IMS (10), dans lequel le réseau d'accès mobile est configuré de sorte qu'un trafic pour un nom de point d'accès (APN) spécifique atteint exclusivement ledit contrôleur de session en périphérie (SBC) et ledit au moins un dispositif M2M IMS (60) situé dans le réseau d'accès mobile est configuré pour utiliser ledit nom de point d'accès spécifique pour se connecter directement via ledit contrôleur de session en périphérie au réseau central IMS, et dans lequel l'au moins un VPN à l'intérieur de l'IMS (10) restreignant au moins une session de communication entre des clients IMS spécifiques (60, 700) est fourni par une liste noire et/ou une liste blanche dédiée à chaque client IMS et définissant des clients IMS de destination (60, 700) approuvés pour être atteints par le client IMS dédié (60, 700) et/ou définissant des clients IMS d'origine (60, 700) approuvés pour atteindre le client IMS dédié (60, 700).

2. Procédé selon la revendication 1, **caractérisé en ce qu'**au moins un VPN est mis en œuvre par un MPLS-VPN.

3. Procédé selon l'une quelconque des revendications précédentes, **caractérisé en ce qu'**au moins un VPN, en particulier MPLS-VPN, est fourni pour un trafic de signalisation et/ou un trafic de média à l'intérieur du réseau central IMS (10).

4. Procédé selon l'une quelconque des revendications précédentes, **caractérisé en ce qu'**un trafic de média d'une connexion entre au moins deux clients IMS (60, 700) peut être restreint ou interdit si ladite connexion n'a pas été signalée à l'avance, par exemple négociée via SIP.

5. Procédé selon l'une quelconque des revendications 1 à 4, **caractérisé en ce que** le réseau central IMS (10) est configuré de sorte que tous les trafics de données IMS, à savoir les trafics de signalisation et de média, passent au moins par un SBC (40, 500).

6. Procédé selon l'une quelconque des revendications précédentes, **caractérisé en ce qu'**au moins un client IMS (700) réside dans un réseau séparé qui est un VPN client, en particulier un réseau MPLS-VPN client, et/ou un Internet de réseau public (30).

7. Procédé selon l'une quelconque des revendications précédentes, **caractérisé en ce qu'**au moins un client IMS (60, 700) est un dispositif mobile et/ou un serveur principal dans lequel l'au moins un dispositif mobile (60) comprend un émetteur/récepteur radio GSM et/ou UMTS et/ou LTE.

8. Procédé selon l'une quelconque des revendications précédentes, **caractérisé en ce que** le système fournit au moins une liste blanche et/ou noire déterminée par l'opérateur configurable par l'opérateur de réseau et/ou au moins une liste blanche et/ou noire déterminée par l'utilisateur configurable par le client IMS dédié (60, 700).

9. Procédé selon la revendication 8, **caractérisé en ce que** la liste blanche et/ou noire déterminée par l'utilisateur est configurable par un libre-service client, par exemple via une API, en particulier SOAP et/ou RESTful, et/ou via un web front-end et/ou via des e-mails spécialement formatés.

10. Procédé selon l'une quelconque des revendications précédentes, **caractérisé en ce qu'**au moins une liste blanche et/ou noire contient une référence à au moins une autre liste, en particulier une liste blanche et/ou noire gérée centrale.

11. Système de communication, comprenant des moyens pour réaliser le procédé selon l'une quelconque des revendications précédentes.

12. Système de communication selon la revendication 11, utilisé pour une application machine à machine (M2M).
